# EUROPEAN PATENT APPLICATION

(11) **EP 2 439 955 A1**
(43) Date of publication of application: **11.04.2012**
(21) Application number: 11180442.3
(22) Date of filing: 07.09.2011
(51) Int. Cl.: H04N 21/485, H04N 21/47

(54) **Navigational operation method**

(30) Priority: 07.10.2010 US 390784 P; 18.01.2011 TW 100101841
(71) Applicant: Novatek Microelectronics Corp., HsinChu 300 (TW)
(72) Inventor: Han, Tsung-Hsun, 112 Taipei City (TW); Lo, Chiao-Jung, 300 Hsinchu City (TW); Wu, Hou-Yi, 300 Hsinchu City (TW)
(74) Representative: von Kreisler Selting Werner

(57) **Abstract**

A navigational operation method, applied to a remote controller of a multi-media player, includes the following steps. One of multiple operation modes of the multi-media player is selected. A navigation key on the remote controller is triggered. A function table or multiple function keys corresponding to the selected operation mode are displayed on the multi-media player.

## Description

This application claims the benefit of US provisional application Serial No. 61/390,784, filed Oct. 7, 2010 and Taiwan application Serial No. 100101841, filed Jan. 18, 2011, the subject matters of which are incorporated herein by reference.

### BACKGROUND

### Technical Field

The invention relates in general to a navigational operation method, and more particularly to a navigational operation method with high convenience.

### Background

Users usually have to enter an On Screen Display (OSD) menu to operate or to set preference functions when displays on the market are displaying contents. Therefore, the users have to perform complicated switches among pages at different layers of the OSD menu to search and configure wanted functions item by item, and to perform a revise operation to back to the contents previously displayed after finishing the configurations. The said design causes great inconvenience for the users to operate.

### SUMMARY

The disclosure is directed to a navigational operation method, utilizing a navigation key to display a function table or multiple function keys for fast operation on a display, thus providing the users with high convenience and high operational performance.

According to a first aspect of the present disclosure, a navigational operation method applied to a remote controller of a multi-media player is provided. The navigational operation method includes the following steps. One of multiple operation modes of the multi-media player is selected. A navigation key on the remote controller is triggered. A function table or multiple function keys corresponding to the selected operation mode are displayed on the multi-media player.

According to a second aspect of the present disclosure, a navigational operation method applied to a touch display is provided. The navigational operation method includes the following steps. The touch display is touched. A navigation key is displayed on the touch display. A function table or multiple function keys corresponding to a current operation mode of the touch display is displayed.

The invention will become apparent from the following detailed description of the preferred but non-limiting embodiments. The following description is made with reference to the accompanying drawings.

### BRIEF DESCRIPTION OF THE DRAWINGS

FIG. 1 shows a flow chart illustrating a navigational operation method according to an embodiment.

FIG. 2 shows a flow chart illustrating a navigational operation method according to another embodiment.

FIG. 3 shows a schematic illustration illustrating a navigational operation method according to an embodiment.

FIG. 4 shows a schematic illustration illustrating a navigational operation method according to another embodiment.

FIG. 5A and FIG. 5B show schematic illustrations illustrating names of all kinds of different function terms at different pages according to an embodiment.

FIG. 6 shows a schematic illustration illustrating a navigational operation method according to the other embodiment.

### DETAILED DESCRIPTION OF THE INVENTION

The disclosure proposes a navigational operation method, utilizing a navigation key to display a function table or multiple function keys for fast operation on a display, so that it is convenient for users to operate or to set functional preferences in a single page without switching.

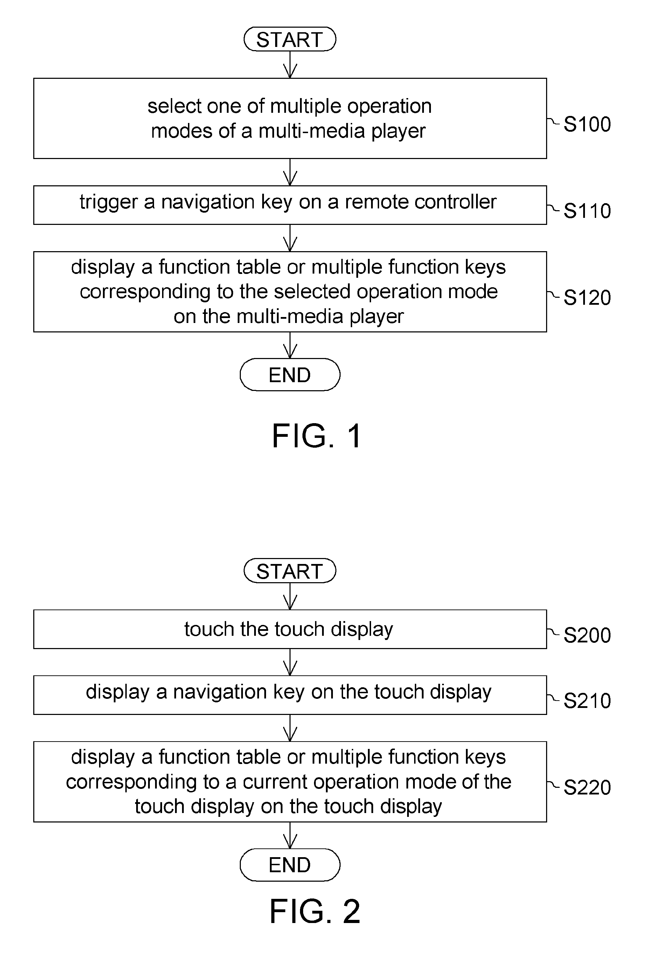

Referring to FIG. 1, a flow chart illustrating a navigational operation method according to an embodiment is shown. The navigational operation method shown in FIG. 1 is substantially applied to a remote controller of a multi-media player. In step S100, one of multiple operation modes of the multi-media player is selected. In step S110, a navigation key on the remote controller is triggered. In step S120, a function table or multiple function keys corresponding to the selected operation mode are displayed on the multi-media player. When one of the other keys on the remote controller, not the navigation key, is triggered, the multi-media player displays a reminder to remind the users that there exists the navigation key on the remote controller to provide the convenient navigation function.

Referring to FIG. 2, a flow chart illustrating a navigational operation method according to another embodiment is shown. The navigational operation method shown in FIG. 2 is substantially applied to a touch display. In step S200, the touch display is touched. After the touch display is touched, in step S21 0, a navigation key is displayed on the touch display. In step S220, a function table or multiple function keys corresponding to a current operation mode of the touch display are displayed on the touch display. The navigation keys mentioned in the navigational operation methods of FIG. 1 and FIG. 2 may be displayed at On Screen Display (OSD) layers of the multi-media player and the touch display, but it is not limited thereto.

When the navigation key is triggered, if displaying contents of the multi-media player or the touch display are executed results of a first application, a part of the function table or the function keys correspond to a first function group of the first application, and the other part of the function table or the functions keys correspond to a second function group of the first application. For example, if the displaying contents of the multi-media player or the touch display are executed results of a video and audio display application, a part of the function table or the function keys correspond to a view function group to perform functions such as a Full-mode or a Panel-mode; the other part of the function table or the functions keys correspond to a play function group to perform functions such as playing, pausing, stopping, or changing a display speed.

Furthermore, when the navigation key is triggered, if displaying contents of the multi-media player or the touch display are executed results of a first application, a part of the function table or the function keys correspond to the first application, and the other part of the function table or the functions keys correspond to a second application. For example, if the displaying contents of the multi-media player or the touch display are executed results of an image viewing application, a part of the function table or the function keys correspond to a view function group to perform image view functions such as zoom-in, zoom-out, a previous picture or a next picture; the other part of the function table or the functions keys correspond to a video and audio display application to perform video and audio display functions such as playing, pausing, stopping, or changing a display speed, thus image viewing and video and audio file playing can be performed simultaneously.

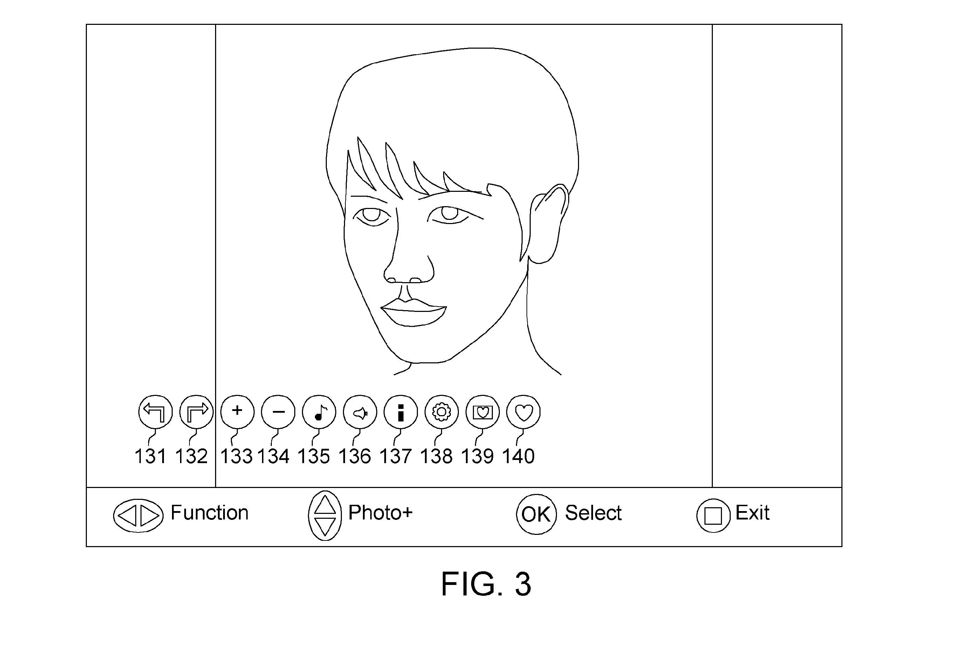

Referring to FIG. 3, a schematic illustration illustrating a navigational operation method according to an embodiment is shown. In FIG. 3, the displaying content of the multi-media player or the touch display is a photo resulted from an execution of an image viewing application. When the navigation key on the remote controller of the multi-media player or on the touch display is triggered, the multi-media player or the touch display displays multiple function keys 131 to 140 for the user to select a wanted function. The functions performed respectively by the function keys 131 to 140 are a previous photo, a next photo, zoom-in, zoom-out, playing music, volume control, information, options, my favorites, and preference settings. The function keys 131 to 134 correspond to the image viewing application; the function keys 135 to 138 correspond to a video and audio play application; the function keys 139 to 140 correspond to a browser application, and it is not limited thereto and is determined according to the design. Consequently, the user can immediately find the wanted function at the same single page without complicated switching as viewing the photo. For example, the user can play music or browse the Internet while viewing the photo.

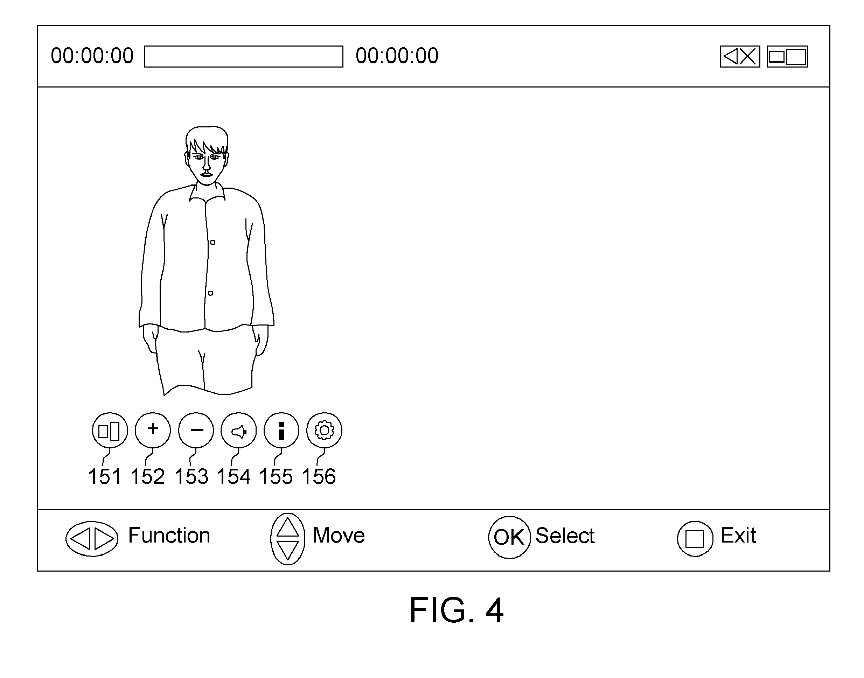

Referring to FIG. 4, a schematic illustration illustrating a navigational operation method according to another embodiment is shown. In FIG. 4, the displaying content of the multi-media player or the touch display is a movie frame resulted from an execution of a video and audio play application. When the navigation key on the remote controller of the multi-media player or on the touch display is triggered, the multi-media player or the touch display displays multiple function keys 151 to 156 for the user to select a wanted function. The functions performed respectively by the function keys 151 to 156 are pacing, zoom-in, zoom-out, volume control, information, and options. The function keys 151 to 154 correspond to a play control function group of the video and audio play application; the function keys 155 to 156 correspond to view function group of the video and audio play application, and it is not limited thereto and is determined according to the design. Consequently, the user can immediately find the wanted function at the same single page as viewing the movie frame, thus saving the complicated switching steps.

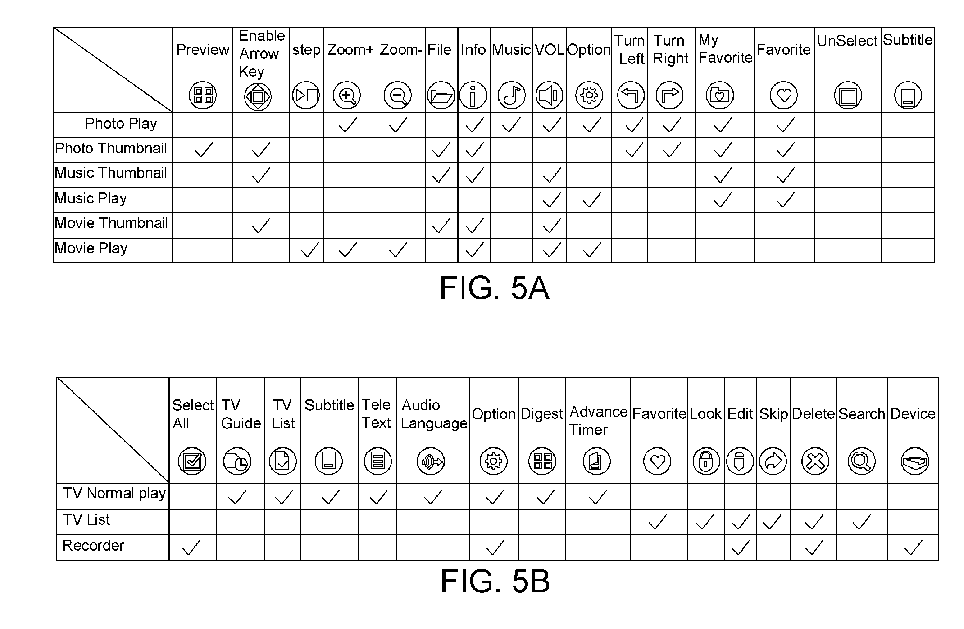

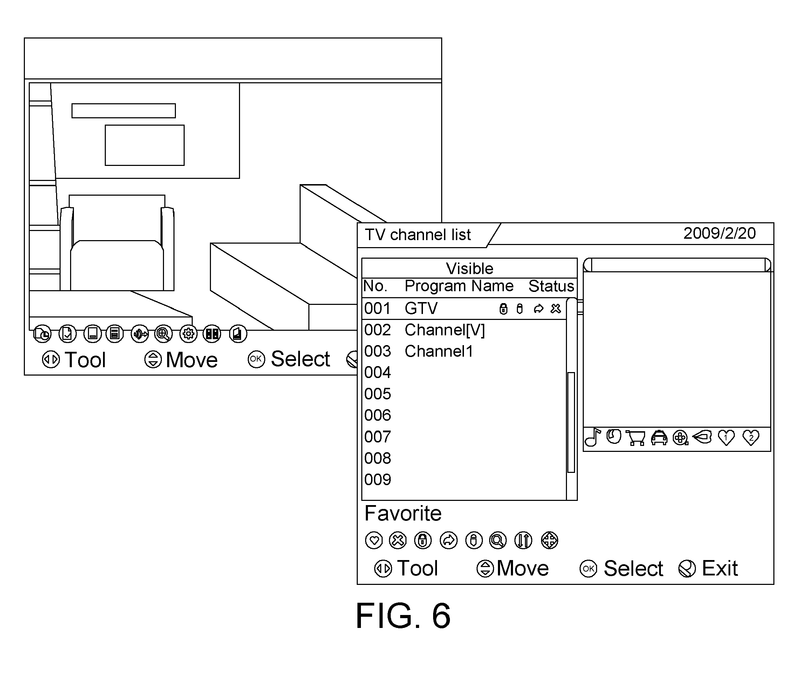

In addition, names of all kinds of different function terms at different pages are shown in FIG. 5A and FIG. 5B, but it is not limited thereto and is determined according the users' requirements and design. Meanwhile, the multiple function keys may be replace by a function table, such as shown in FIG. 6, showing a schematic illustration illustrating a navigational operation method according to the other embodiment. In FIG. 6, in a normal display operation mode of the TV, when the navigation key is triggered, a function table, such as a TV channel list, is displayed on the display for the user to operate or to set preference functions conveniently without switching the page.

The navigational operation method proposed in the disclosure takes users' convenience as a starting point and utilizes a navigation key to display a function table or multiple function keys for fast operation on a display, so that the users can operate or set functional preferences as far as possible in a single page without switching pages, thus providing the users with high convenience and high operational performance.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A navigational operation method, applied to a remote controller of a multi-media player, comprising:
selecting one of a plurality of operation modes of the multi-media player;
triggering a navigation key on the remote controller; and
displaying a function table or a plurality of function keys corresponding to the selected operation mode on the multi-media player.

2. The navigational operation method according to claim 1, wherein when the navigation key is triggered, if displaying contents of the multi-media player are executed results of a first application, a part of the function table or the function keys correspond to a first function group of the first application, and the other part of the function table or the functions keys correspond to a second function group of the first application.

3. The navigational operation method according to claim 1, wherein when the navigation key is triggered, if displaying contents of the multi-media player are executed results of a first application, a part of the function table or the function keys correspond to the first application, and the other part of the function table or the functions keys correspond to a second application.

4. The navigational operation method according to claim 1, wherein the multi-media player displays a reminder to remind users an existed navigation function of the navigation key when one of other keys on the remote controller is triggered.

5. A navigational operation method, applied to a touch display, comprising:
touching the touch display;
displaying a navigation key on the touch display; and
displaying a function table or a plurality of function keys corresponding to a current operation mode of the touch display.

6. The navigational operation method according to claim 5, wherein when the navigation key is triggered, if displaying contents of the touch display are executed results of a first application, a part of the function table or the function keys correspond to a first function group of the first application, and the other part of the function table or the functions keys correspond to a second function group of the first application.

7. The navigational operation method according to claim 5, wherein when the navigation key is triggered, if displaying contents of the touch display are executed results of a first application, a part of the function table or the function keys correspond to the first application, and the other part of the function table or the functions keys correspond to a second application.
